(19) Europäisches Patentamt

European Patent Office

Office européen des brevets

(11) **EP 0 618 460 B1**

(12) **EUROPÄISCHE PATENTSCHRIFT**

(45) Veröffentlichungstag und Bekanntmachung des Hinweises auf die Patenterteilung:
**01.03.2000 Patentblatt 2000/09**

(51) Int. Cl.[7]: **G01S 13/02**, B66C 13/46,
G06K 7/10, G01V 15/00

(21) Anmeldenummer: **94104638.5**

(22) Anmeldetag: **23.03.1994**

(54) **System zur Bestimmung der Position und/oder Geschwindigkeit eines Objekts mittels Oberflächenwellen-Identifikationsmarken, anzuwenden insbesondere für Lade- und Umschlagsysteme**

System for determining the position and/or velocity of an object by means of surface wave identification tags, to be used especially for loading and handling systems

Système pour la détermination de la position et/ou de la vitesse d'un objet en utilisant un marqueur d'identification à ondes de surface, à utiliser notamment dans les systèmes de chargement et déplacement

(84) Benannte Vertragsstaaten:
**AT CH DE FR IT LI**

(30) Priorität: **31.03.1993 DE 4310609**

(43) Veröffentlichungstag der Anmeldung:
**05.10.1994 Patentblatt 1994/40**

(73) Patentinhaber:
**SIEMENS AKTIENGESELLSCHAFT**
**80333 München (DE)**

(72) Erfinder:
**Magori, Valentin, Dipl.-Phys.**
**D-81539 München (DE)**

(56) Entgegenhaltungen:
WO-A-90/09336        WO-A-90/15343
DE-U- 9 104 179      US-A- 4 188 629
US-A- 4 739 329

**Beschreibung**

Die vorliegende Erfindung bezieht sich auf ein System zum Erkennen der relativen Position und/oder der relativen Bewegung zweier Objekte zueinander, und zwar mittels funktechnischer Ortung unter Verwendung von passiven Oberflächenwellen-Identifikationsmarken (ID-Tag). Das erfindungsgemäße System ist insbesondere für Betriebsbereiche mit Laden und Umschlagen von mit Ladegeräten und/oder Hebezeugen zu bewegenden Lasten als solche relevanten Objekte vorgesehen. Solche Lasten/Objekte sind insbesondere Container, deren Umschlag mit z.B. Krananlagen mittels des erfindungsgemäßen Systems wenigstens soweit automatisch durchführbar ist, daß die Genauigkeit und Präzision der Ansteuerung der Ladegeräte und Objekte zueinander nicht mehr von der Geschicklichkeit des dabei beteiligten Menschen abhängt.

Automatisierungen auf dem technischen Gebiet des Lade- und Umschlagwesens in Häfen und Güterbahnhöfen sind bekannt. Es wird dort auch mit Schallwellen und/oder Funkwellen zur Identifikation und Positionsbestimmung gearbeitet. Der technische Aufwand bekannter Anlagen ist aber derart, daß deren Verbreitung sich in Grenzen hält bzw. Voraussetzungen bedingt, die breiteste Einführung solcher automatischen Systeme im Wege stehen.

Es ist bekannt, als ID-Tags bekannte Identifizierungsmarken zu verwenden, die eine auf einem piezoelektrischen Substratkörper vorhandene Oberflächenwellen-Streifenstruktur mit einer elektromechanischen/mechanoelektrischen Interdigitalwandler-Struktur und einer Reflektorstruktur und eine an die Wandlerstruktur angeschlossene Eingangs-/Ausgangsantenne umfassen. Solche ID-Tags/Identifizierungsmarken sind passiv arbeitende Elemente mit elektrischem Eingang und Ausgang, jedoch akustomechanischer Funktionsweise. Um wie vorgesehen zu funktionieren, bedürfen sie keiner eigenen Stromversorgung. Sie sind im Aufbau außerordentlich robust und arbeiten infolge ihrer hermetischen Kapselung praktisch vollständig unabhängig von Verschmutzungen. Sie eignen sich daher selbst für sehr rauhen technischen Betrieb in sogar umweltfeindlicher Umgebung. Solche Identifizierungsmarken haben bei dem von der Firma Siemens aufgebauten, fernabfragbaren Gebührenerfassungsystem des Autobahnsystems der Stadt Oslo großtechnische Anwendung gefunden. Sie sind sehr preiswert herzustellen, bedürfen im Betrieb keinerlei Wartung und sind außerordentlich langlebig ohne ihre Präzision zu verlieren.

Mit solchen passiven Identifizierungsmarken wird wie folgt gearbeitet: Mit einem Abfragegerät werden über dessen Sendeantenne fortlaufend Funkimpulse im Dezimeterwellenbereich ausgesandt. Im Reichweitebereich des Senders empfängt diese Identifizierungsmarke diesen Funkimpuls (Burst) mittels ihrer Eingangsantenne, von der aus das empfangene Impulssignal dem bereits genannten Wandler zugeführt wird. Mit dem in der Identifizierungsmarke vorhandenen Reflektor wird der mittels des Wandlers erzeugten akustischen Oberflächenwelle in dem Reflektor ein charakteristisches Impulsfolgemuster aufgeprägt. Das Muster ist durch die jeweils gewählte Struktur des Reflektors bestimmbar bzw. bestimmt. Bei üblichen Identifizierungsmarken solcher Art beträgt die Variationsvielfalt, d.h. die Anzahl der möglichen Kodierungen ein mehrfaches von $10^9$ Möglichkeiten. Der speziellen Kodierung des Reflektors entsprechend wird über die Antenne der Identifizierungsmarke ein elektromagnetisches (Anwort-) Signal, als Impulsantwort bekannt, an die (zuvor als Sendeantenne benutzte) jetzt als Empfangsantenne des Auswertegerätes benutzte Antenne zurückgesandt. Diese

Impulsantwort besteht aus einer der vorgegebenen Codierung der Reflektorstruktur entsprechenden Impulsfolge mit einer Trägerfrequenz, die entweder gleich der Sendefrequenz ist oder deren Abweichung von der Sendefrequenz eine weitere Signalinformation ist, wie dies noch weiter unten beschrieben wird.

Vorteilhafterweise ist die Impulsantwort der Identifizierungsmarke um etwa 1 μs verzögert gegenüber dem Sendeimpuls. Etwaige Echos aus der nahen Umgebung, die viel zeitiger am die Empfangsantenne des Auswertegerätes gelangen, können somit problemlos zeitlich ausgeblendet werden. Störungen durch Echosignale sind hier also kein Problem. Im übrigen ist die Abfragedistanz vorteilhafterweise relativ begrenzt und begrenzbar, sodaß Probleme mit räumlich benachbarten Funk/Hochfrequenzan-lagen zumindest leicht beherrschbar sind.

Aus WO 90/15343 ist ein System zur Abstandsbestimmung von Objekten bekannt, mit dem die Entfernung eines am Objekt angebrachten passiven SAW-Transponders (Identifizierungsmarke mit Oberflächenwellen-Bauteil) im Erfassungskegel eines Abfragesignals festgestellt werden kann.

Aus US 4 739 329 ist ein Radarsystem bekannt, bei dem mittels aufeinanderfolgender Dopplermessungen eine Relativgeschwindigkeit zwischen einem Sender an einem Flugobjekt und einem Radargerät ermittelt werden kann.

Aus WO 90/09336 ist eine Ladevorrichtung mit einer Sensoranordnung bekannt, welche die relative Position eines Containers zur Ladevorrichtung feststellt. Mehrere Sensoren am Ladegeschirr messen jeweils durch Reflektion eines Sendesignals den Abstand zum Container, so daß die Positionierung des Ladegeschirrs automatisch gesteuert erfolgen kann.

Aufgabe der vorliegenden Erfindung ist es, unter Verwendung von Identifizierungsmarken ein alternatives System und ein alternatives Verfahren anzugeben, mit dem das Ladegeschäft automatisiert und/oder mit höherer Präzision durchzuführen ist, als dies in der Regel von Menschen ausführbar ist.

Die Merkmale eines die Aufgabe lösenden Systems bzw. Verfahrens sind im Patentanspruch 1 bzw. Patentanspruch 5 angegeben. Die Unteransprüche geben Weiterbildungen der Erfindung an.

Die vorliegende Erfindung betrifft den vorteilhaften Einsatz solcher passiv arbeitenden Oberflächen-Identifizierungsmarken zur berührungslosen Identifikation und zum Erkennen von Positionen und/oder Bewegungsgeschwindigkeiten von z.B. Containern oder dgl., wie sie im Transportwesen regelmäßig Verwendung finden. Im Zusammenhang mit der Erfindung ist vorgesehen, daß solche wie oben beschriebene Identifizierungsmarken (mit Oberflächenwellenstruktur und Eingangs/Ausgangsan-tenne) an vorge benen Stellen z.B. solcher Container auf deren Außenfläche anzubringen, z.B. anzukleben, anzuheften oder dgl.. Sinngemäß können auch Fahrzeuge bzw. deren Ladungsflächen mit jeweils einer oder mehreren solchen Identifizierungsmarken versehen sein.

Bei dem erfindungsgemäßen System geht es im wesentlichen auch darum, wie in sinnvoller Weise mit solchen im Prinzip nach schon bekannten Identifizierungsmarken vorteilhaft gearbeitet werden kann und welche Auswertungen vorzusehen bzw. vorzunehmen sind, um z.B. das Ladegeschirr eines Kranes, vom Kranführer grob gesteuert, mit hoher Präzision automatisch an z.B. die Ladeösen eines Containers cm-genau heranzuführen, und zwar dies selbst bei relativ schlechter Sicht, z.B. im Nachtbetrieb.

Die Erfindung wird nachfolgend anhand der beigefügten Figuren noch ins einzelne gehend erläutert.

Die Figur 1    zeigt eine Prinzipdarstellung zu einer Anwendung der Erfindung.

Die Figur 2    zeigt den prinzipiellen Aufbau einer bei dem bzw. für das erfindungsgemäße System zu verwenden Identifizierungsmarke 1.

Die Figur 3    zeigt das Diagramm eines Impulsantwort-Signals.

Die Figur 4    zeigt ein Diagramm für eine Positionsbestimmung aus relativen Bewegungen der Objekte zueinander.

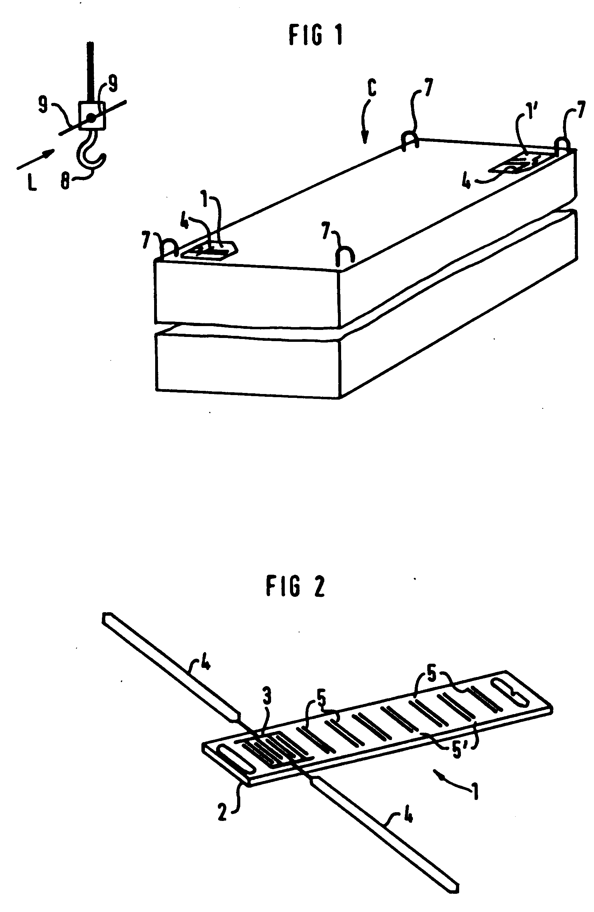

Die Figur 1 zeigt, mit C bezeichnet, einen Container mit Ösen 7 zum Einhängen eines Kranhakens 8 eines Ladegeschirres L. Mit 1 und 1' sind zwei Identifizierungsmarken bezeichnet, wie sie noch nachfolgend näher beschrieben werden. Mit 9 ist die Sende-/Empfangsantenne eines Abfrage-/Auswertegerätes bezeichnet.

In Figur 2 ist mit 1 eine auch als ID-Tag bekannte Identifizierungsmarke schematisch dargestellt. Auf der Oberfläche des mit 2 bezeichneten Substratkörpers aus vorzugsweise piezoelektrisch stark koppelndem Material wie Lithiumniobat, -tantalat und dgl., befindet sich eine photolithographisch aufgebrachte Streifenstruktur. Der mit 3 bezeichnete Anteil dieser Streifenstruktur ist der Indigitalwandler, an dessen elektrischen Anschlüssen die Dipole der Antenne 4 angeschlossen sind. Mit 5 ist die Streifenstruktur des Reflektors bezeichnet. Die nur mit Punktierung angedeuteten, tatsächlich jedoch freien Plätze 5' weggelassener Reflektorstreifen, genauer deren Verteilung in der Reflektorstruktur 5, bilden die vorgebbare Codierung. Eine solche Reflektorstruktur 5 hat in der Praxis mehrere 100 in periodischer Folge angeordnete Reflektorstreifen, woraus die große Anzahl der Codierungsmöglichkeiten ersichtlich ist.

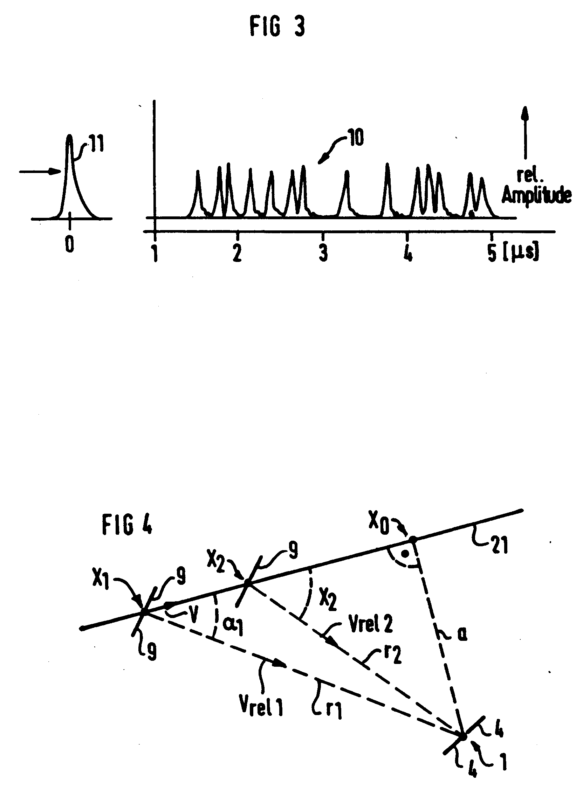

Figur 3 zeigt die in der Impulsantwort der Identifizierungsmarke 1 enthaltene Impulsfolge 10 (Hüllkurve), die die Antwort der Codierung der Reflektorstruktur 5 auf einen empfangenen Burst 11 ist.

Die Veränderung des zeitlichen Abstands zwischen dem Burstimpuls 11 und den Antwortimpulsen 10, ausgehend von einem vorgegebenen Wert für einen bekannten Abstand, ist eine Bezugsgröße für eine Änderung des räumlichen Abstands zwischen den Antennen 9 und 4 der jeweils zwei Objekte, z.B. zwischen dem Ladegeschirr L und dem Ort der antwortenden Identifizierungsmarken 1 bzw. 1'. In der Figur sind die Amplitudenhöhen der Impulsspitzen von 10 und 11 nicht maßstäblich zueinander wiedergegeben.

Die Erfindung betrifft das Erkennen der relativen Position zweier Objekte zueinander, nämlich eines auf dem Lagerplatz abgestellten Containers C als z.B. das eine Objekt und eines Ladegeschirres L eines Kranes als z.B. das andere Objekt. Während der von Hand oder automatisch gesteuerten Bewegung des Ladegeschirres hin zu dem Container werden die relativen Positionsbestimmungen ausgeführt, wobei der Container im Regelfall stillsteht und nur das Ladegeschirr bewegt wird.

Eine Weiterbildung der Erfindung betrifft Erkennen der Bewegung, speziell der Geschwindigkeit der Bewegung von zwei Objekten relativ zueinander. Die Auswertung erfolgt dabei unter Nutzung der sich ergebenden Geschwindigkeitswerte, z.B. allein des Ladegeschirres bei stillstehendem, abgestelltem Container.

Mit einem erfindungsgemäßen System können beide Auswertungen herangezogen werden.

Für beide Auswertungen sind an dem einen Objekt, z.B. dem Container, mehrere Identifizierungsmarken anzubringen. Diese mehrere Identifizierungsmarken sind so zu plazieren, daß sie relevante Stellen des Containers kennzeichnen. Zum Beispiel ist eine (jeweilige) Identifizierungsmarke nahe einer Öse 7 zum Einhaken des Ladegeschirrs angebracht. Zum Erkennen der Gestalt bzw. der Richtungsposition des abgestellten Containers benötigt man ein Muster aus wenigstens zwei, im Abstand voneinander am Container angebrachten Identifizierungsmarken 1 und 1', wobei die Signalverarbeitung das Muster kennen, d. h.wissen muß, welche Stellen des Containers dies definitionsgemäß sind. Sind mehrere Identifizierungsmarken 1, 1' vorgesehen, so haben diese vorteilhafterweise unterschiedliche Kodierung, damit sie für das Auswertegerät unterscheidungsfähig erkennbar sind.

Es ist auch vorteilhaft, Identifizierungsmarken 1, 1' mit verschiedener Kodierung auch mit unterschiedlicher Form bzw. Montagemittel zu versehen. Die Aufnahme am Objekt C hat die jeweils entsprechende Form. In Figur 1 haben diese beiden Identifizierungsmarken Basisplatten, bei deren rechteckiger Form jeweils eine Ecke abgeschnitten ist. Mit einer solchen oder dergleichen Maßnahme kann erreicht werden, daß eine jeweilige Identifizierungsmarke mit einer bestimmten Kodierung unverwechselbar nur an einer wahlweise vorgegeben bestimmten Stelle am Container angebracht werden kann.

Weiter ist erforderlich, daß zwischen diesen Stellen bzw. Identifizierungsmarken am Container und der Antenne am Ladegeschirr direkte Funk-(Sicht-)-Verbindung besteht.

Wie gesagt, ist an dem anderen Objekt, z.B. dem Ladegeschirr L, die Antenne 9 des Abfrage-/Auswertegerätes zum Aussenden des Abfrageimpulssignals und zum Empfang des Impulssignals angebracht.

Schon mit einer einzigen Messung kann der (gradlinige) Abstand zwischen der Antenne 9 und der (einen) Identifizierungsmarke 1, 1' grob ermittelt werden. Dieser aktuelle Abstand ergibt sich aus der Zeitverzögerung, die die Impulsantwort aufgrund der hin- und her durchlaufenen Abstandsstrecke benötigt hat. Werden die Abstände von der Sende-/Empfangsantenne 9 zu wenigstens drei, am Container an vorgegebenen Stellen angebrachten Identifizierungsmarken (mit unterschiedlicher Kodierung) gemessen, kann mit einem Rechner die Position der Antenne 9, d.h. die Position des Hebegeschirrs, gegenüber dem Container eindeutig bestimmt werden. Damit kann das Hebegeschirr automatisch auf den Container hingeführt werden, und zwar außerdem auch auf den richtigen Container, wenn in der Auswertung berücksichtigt wird, welcher Container welche Kodierungen seiner individuellen Identifizierungsmarken hat.

Zur Figur 3 ist anzumerken, daß ein großer Anteil der zeitlichen Verzögerung des Impulsantwortsignals 10 auf der Signallaufzeit in der Oberflächenwellenstruktur 3, 5 beruht. Bei nur noch sehr geringen Abständen zwischen den Antennen 9 und 4 geht man zur Auswertung der Phasenänderung (gegenüber einer Bezugsphase) über.

Bei Messung mit laufend bewegtem Hebegeschirr, d.h. mit nicht ruhender Sende-/Empfangsantenne des Abfrage-/Auswertegerätes, ergeben sich aus der Relativgeschwindigkeit der beiden Objekte zueinander, nämlich des Hebegeschirres und des (hier angenommener ruhenden) Containers Dopplerfrequenzverschiebungen der Trägerfrequenz des Impulsantwortsignals. Bei vorhandener Relativgeschwindigkeit ist bei der Sendefrequenz $f_S$ die empfangene Trägerfrequenz der Impulsantwort $f_S$ +/- $\Delta f$. Bei relativ kleinen Geschwindigkeiten ist die Dopplerfrequenzverschiebung $\Delta f$ sehr klein und zur Auswertung wird die Phasenverschiebung $\Delta\varphi$ ausgewertet. Es gilt die Gleichung

$$\Delta\varphi = 2 \cdot 2\pi \cdot {}^{\Delta r/\lambda} \qquad\qquad (1)$$

wobei $\lambda$ die Wellenlänge der Sendefrequenz des Abfrageimpulses ist. Der Faktor 2 beruht wiederum auf dem 2-maligen Durchlauf der Abstandsstrecke /r/. Für die der Dopplerfrequenz entsprechende Doppler-Winkelgeschwindigkeit $\overline{\omega}$ gilt bei der Relativgeschwindigkeit $v_{rel}$ zwischen der Sende-/Empfangsantenne und (der Antenne) der jeweiligen Identifizierungsmarke

$$\overline{\omega} = \frac{4\pi\bullet}{\lambda} v_{rel}$$

Eine weitere erfindungsgemäße Auswertemaßnahme besteht darin, den Verlauf und das Vorzeichen der Doppler-Geschwindigkeit und der Änderung des Phasenwinkels $\Delta\varphi$ festzustellen und zur Ermittlung der relativen Position dieser Antenne und der Identifizierungsmarke zueinander zu benutzen. Bei dieser Messung mit einer Geschwindigkeit v bewegten Sende-/Empfangsantenne 9 im Abstand an der jeweils abgefragten Identifizierungsmarke 1 vorbei, läßt sich aus der zwischen zwei Messungen zurückgelegten Wegstrecke $\Delta x$ der Antenne auf der Bahn derselben und der Veränderung des Abstandes $\Delta r$ zwischen dieser Antenne 9 und der Identifizierungsmarke derjenige Abstand a ermitteln, in dem diese Antenne auf ihrer Bewegungsbahn an der Identifzierungsmarke vorbeibewegt wird. Diese so definierte Abstandsgröße a kann nämlich nicht durch Auswertung der Dopplerverschiebung ermittelt werden, weil dieser Abstand a senkrecht zur Relativbewegung der Antenne gerichtet ist, also die Dopplerverschiebung an dieser Stelle gleich Null ist.

Die Figur 4 zeigt das zu diesen Ausführungen gehörende Diagramm, worin die fortlaufend bestimmbare Richtung $\alpha$ = arccos ($v_{rel}$ / v) zu bestimmen ist. Die Berechnung des Schnittpunktes der von der Bewegungsbahn 21 im Winkel $\alpha$ ausgesandten Strahlung der Abfrageimpulse erfolgt durch die folgenden zwei Gleichungen für die Unbekannte a (mit der unbekannten Ortskoordinate $x_0$ auf der Bahn 21).

$$a = [r_1{}^2 - (x_0 - x_1)^2]^{1/2}; \; a = [r_2{}^2 - (x_0 - x_2)^2]^{1/2} \qquad (3)$$

Somit läßt sich der Abstand a der Figur 4 bei bekannter Geschwindigkeit v ermitteln. Die Geschwindigkeit v, mit der die Sende-/Empfangsantenne 20, d.h. das Hebegeschirr, bewegt wird, ist bekannt bzw. vom Rechner aus der Bewegung zu ermitteln.

Die Stelle $x_0$, d.h. die Stelle kleinsten Abstandes a, der an der Identifizierungsmarke 1 vorbei verlaufenden Bewegungsbahn 2 des Ladegeschirrs, bzw. der Antenne 9, von der betreffenden Identifizierungsmarke 1 ist diejenige, bei der die Dopplerfrequenzverschiebung der Frequenz des Trägers der Impulsantwort das Vorzeichen wechselt (d.h. wie oben schon angegeben die Dopplerfrequenzverschiebung durch Null geht). Allerdings ist dieser Punkt im Regelfall nur mit begrenzter Genauigkeit ermittelbar, weil das Maß der Frequenzverschiebung in der Nähe dieses Punktes $x_0$ mit geringstem Abstand a sich mit kleinem Gradienten dem Wert Null nähert.

Die Geschwindigkeit mit der das z. B. Hebegeschirr bewegt wird, läßt sich mittels im System vorhandener Sensoren (Tachometer) ermitteln oder wird mittels Ultraschall- oder Mikrowellensensoren (z.B. gegenüber einem sonstigen festen Ort, z.B. einer der Stützen des Portals bei einem Portalkran bestimmen, dessen eventuell vorhandene Bewegungsgeschwindigkeit über Grund ihrerseits tachometrisch festgestellt wird. Die Geschwindigkeit, mit der die am Hebegeschirr angebrachte Antenne bewegt wird, kann auch aus der Asymptote des Verlaufes der Dopplerfrequenzverschiebung ermittelt werden, weil in großer Entfernung von der abgefragten Identifizierungsmarke die aus der Dopplerverschiebung abgeleitete Geschwindigkeit gleich der wahren Geschwindigkeit des Hebegeschirrs ist. Häufig wird jedoch die Bewegung des Hebegeschirrs eine beschleunigte Bewegung sein. Die Geschwindigkeit kann dann aus dem Mittelwert zwischen den beiden asymptotisch ermittelten Geschwindigkeitswerten festgestellt werden, nämlich dem asymptotischen Wert vor dem Vorbeifahren und demjenigen nach dem Vorbeifahren an der abgefragten Identifizierungsmarke. Mit einem auf gradliniger Bahn erfolgendem Vorbeilauf des Hebegeschirrs, d.h. der Sende-/Empfangsantenne des Systems, an der jeweils abgefragten Identifizierungsmarke läßt sich noch keine eindeutige Aussage machen, in welcher Richtung des vollen 360° Kreises um diese Bewegungsbahn man an der Identifizierungsmarke vorbeigelaufen ist. Eindeutige Aussage läßt sich diesbezüglich jedoch dann machen, wenn an dem Hebegeschirr in einem Abstand voneinander zwei solche Antennen angebracht sind, die dieselbe Identifizierungsmarke abfragen und die dementsprechend die Impulsantwort an zwei verschiedenen Orten des Raumes empfangen und die entsprechend unterschiedlichen Laufzeiten bzw. Dopplerverschiebung und deren Verlauf und dgl.auswerten. Die Steilheit der beim Vorbeibewegen der Eingangs-/Ausgangsantenne 9 an der Identifizierungsmarke 1 feststellbaren Änderung der Dopplerfrequenz ist ebenfalls ein Maß für den Abstand der Bahn von der Identifizierungsmarke. Je größer die Steilheit ist, umso geringer ist dieser Abstand. Entsprechendes ist erreichbar, wenn man das Hebegeschirr auf zwei im Abstand voneinander parallelen Bahnen an der betreffenden Identifizierungsmarke vorbeilaufen läßt. Bereits mit nur einem Durchlauf und nur einer Antenne läßt sich jedoch Eindeutigkeit hinsichtlich des Ortes der abgefragten Identifizierungsmarke aus mehreren aufeinanderfolgenden Abfragen erzielen, wenn diese Bewegungsbahn eine gekrümmte Bahn ist, was z.B. bei einem um seine senkrechte Achse schwenkenden Kran regelmäßig der Fall ist. Eindeutigkeit kann auch erreicht werden, indem (praktisch gleichzeitig) mehrere am Container angebrachte Identifizierungsmarken mit verschiedener Kodierung abgefragt werden. In die Auswertung kann auch Wissen über die ungefähre Lage der abzufragenden Identifizierungsmarke und ihrer Anbringung einbezogen werden. Ebenso können plausible Annahmen vereinfachender Weise hinzugezogen werden, z.B. daß der Container auf dem Boden steht. Weiter kann a priori- und erlerntes Wissen mit Fuzzy-Logik genutzt werden.

Bei dem voranstehend beschriebenen Beispiel ist das eine Objekt ein Container und das andere Objekt ein, Hebezeug. Dies schränkt aber nicht die ganz allgemeine Anwendbarkeit der Erfindung auf zwei sonstige Objekte ein, die z. B. ein Gegenstand und ein Gabelspapler, die z. B. die am Kranhaken 8 hängende Ladung (wobei die Sende-/Empfangsantenne 9 vorzugsweise am Haken angebracht ist) und eine Ladefläche eines Transportfahrzeugs oder die Luke eines Schiffs-Stauraums als Beladefläche ist, oder die z.B. die Öse der Deichsel eines stehenden, zu kuppelnden Anhängers und die Anhängerkupplung des rangierenden Zugfahrzeuges sein können.

**Patentansprüche**

1. System zur relativen Abstandsbestimmung zweier Objekte zueinander mittels funktechnischer Ortung unter Verwendung einer passiven Identifizierungsmarke (ID-Tag) (1), die eine Eingangs-/Ausgangs-Antenne (4) hat, bei dem die Identifizierungsmarke (1) ein Oberflächenwellen-Bauteil mit Wandler- und Reflektorstruktur ist,
**dadurch gekennzeichnet,**
daß zur eindeutigen Bestimmung der relativen Position zwischen zwei Objekten im Abstand voneinander mehrere Identifizierungsmarken (1) mit unterschiedlicher Kodierung an dem einen der zwei Objekte an vorgegebener Stelle desselben angebracht sind und sich an dem dazu zweiten Objekt eine Sende/Empfangsantenne (9) an vorgegebener Stelle desselben angebracht ist, über die Funkimpulse (11) auszusenden und Impulsantwortsignale zu empfangen sind und die mit einem Abfrage-/Auswertegerät verbunden ist, und wobei das Abfrage-/Auswertegerät so ausgebildet ist, daß aus dem empfangenen Impulsantwortsignal (10) ein augenblicklicher Abstand (r) zwischen der Sende-/Empfangsantenne (3) des Abfragegeräts und den Identifizierungsmarken (1) aus den Laufzeiten für die Wegstrecken zwischen den Antennen und/oder aus der Phase, bezogen auf eine Bezugsphase, und daraus die Position des ersten Objekts relativ zum zweiten Objekt ermittelbar ist.

2. System nach Anspruch 1,
bei dem an dem einen Objekt zur Lageerkennung drei Identifzierungsmarken (1), jeweils im Abstand voneinander an vorgegebenen Stellen des Objekts angebracht sind, die sich in der Kodierung ihrer Impulsantwortsignale unterscheiden.

3. System nach Anspruch 1 oder 2,
bei dem Identifizierungsmarken mit verschiedener Kodierung nach einem vorgegebenen Muster bezüglich ihrer Verteilung an dem Objekt angebracht sind.

4. System nach Anspruch 3,
bei dem eine Identifizierungsmarke einer bestimmten Kodierung zugeordnete Form/Montagemittel aufweist, durch die eine solche Identifizierungsmarke von Identifizierungsmarken anderer Kodierung hinsichtlich der mechanischen Anbringung unterschieden ist.

5. Verfahren zur relativen Abstandsbestimmung zweier Objekte zueinander mittels funktechnischer Ortung unter Verwendung einer passiven Identifizierungsmarke (ID-Tag) (1), die eine Eingangs-/Ausgangs-Antenne (4) hat, bei dem die Identifizierungsmarke (1) ein Oberflächenwellen-Bauteil mit Wandler- und Reflektorstruktur ist,
**dadurch gekennzeichnet,**
daß zur eindeutigen Bestimmung der relativen Position zwischen zwei Objekten im Abstand voneinander mehrere Identifizierungsmarken (1) mit unterschiedlicher Kodierung an dem einen der zwei Objekte an vorgegebener Stelle desselben angebracht sind und sich an dem dazu zweiten Objekt eine Sende/Empfangsantenne (9) an vorgegebener Stelle desselben angebracht ist, über die Funkimpulse (11) auszusenden und Impulsantwortsignale zu empfangen sind und die mit einem Abfrage-/Auswertegerät verbunden ist, und wobei das Abfrage/Auswertegerät so ausgebildet ist, daß aus dem empfangenen Impulsantwortsignal (10) ein augenblicklicher Abstand (r) zwischen der Sende-/Empfangsantenne (9) des Abfragegeräts und den Identifizierungsmarken (1) aus den Laufzeiten für die Wegstrecken zwischen den Antennen und/oder aus der Phase, bezogen auf eine Bezugsphase, und daraus die Position des ersten Objekts relativ zum zweiten Objekt ermittelbar ist.

6. Verfahren nach Anspruch 5,
bei dem mit Hilfe von wenigstens zwei zeitlich aufeinander folgend abgefragten Impulsantwortsignalen die Geschwindigkeit der Bewegung von zwei Objekten relativ zueinander ermittelt wird.

7. Verfahren nach Anspruch 5 oder 6,
bei dem der Verlauf der Doppler-Frequenzverschiebung zur Bestimmung der Bahngeschwindigkeit und/oder zur Bestimmung des Bahnpunktes mit geringstem Abstand von der abgefragten Identifizierungsmarke benutzt wird.

8. Anwendung eines Systems nach einem der Ansprüche 1 bis 4 bzw. Verfahrens nach einem der Ansprüche 5 bis 7, zum Greifen, Rangieren und/oder Umschlagen eines Containers als dem einen Objekt mittels einer Greif-/Hängevorrichtung als dem anderen Objekt.

9. Anwendung eines Systems nach einem der Ansprüche 1 bis 4 bzw. Verfahrens nach einem der Ansprüche 5 bis 7, zur Erkennung der Position und Ausrichtung einer Beladefläche als dem einen Objekt und eines Ladegeschirrs als dem anderen Objekt.

10. Anwendung eines Systems nach einem der Ansprüche 1 bis 4 bzw. Verfahrens nach einem der Ansprüche 5 bis 7, zum Kuppeln eines stehenden Fahrzeuts als dem einen Objekt mit einem zu bewegenden Fahrzeug als dem anderen Objekt.

11. Anwendung eines Systems nach einem der Ansprüche 1 bis 5 bzw. Verfahrens nach einem der Ansprüche 6 bis 10,
mit einem Gabelstapler als dem einen Objekt und einem vom Gabelstapler aufzunehmenden Gegenstand als dem anderen Objekt.

12. Anwendung eines Systems nach einem der Ansprüche 1 bis 5 bzw. Verfahrens nach einem der Ansprüche 6 bis 10,
zur automatisch gesteuerten Annäherung der zwei Objekte zueinander.

**Claims**

1. System for determining the relative distance between two objects by means of radio positioning-finding using a passive identification mark (ID tag) (1) which has an input/output antenna (4), in the case of which the identification mark (1) is a surface acoustic wave component having a converter and reflector structure, characterized in that, in order to determine the relative position between two objects at a distance from one another uniquely, a plurality of identification marks (1) with different coding are applied at a predetermined point on one of the two objects, and a transmitting/receiving antenna (9) is applied at a predetermined point on the second object with respect to this, via which antenna (9) the radio pulses (11) can be transmitted and pulsed response signals can be received, and which is connected to an interrogation/evaluation appliance, and in which case the interrogation/evaluation appliance is designed such that the received pulsed response signal (10) can be used to determine an instantaneous distance (r) between the transmitting/receiving antenna (9) of the interrogation appliance and the identification marks (1), from the delay times for the path lengths between the antennas and/or from the phase, with respect to a reference phase, and, from this, the position of the first object relative to the second object.

2. System according to Claim 1, in which three identification marks (1), in each case at a distance from one another and at predetermined points on the object, are applied to one object for orientation identification, the coding of the pulsed response signals from which identification marks (1) differs.

3. System according to Claim 1 or 2, in which identification marks having different coding are applied to the object in accordance with a pattern whose distribution is predetermined.

4. System according to Claim 3, in which one identification mark has the shape/mounting means associated with a specific coding, by means of which such an identification mark can be distinguished from identification marks with a different coding, in terms of the mechanical application.

5. Method for determining the relative distance between two objects by means of radio positioning-finding using a passive identification mark (ID tag) (1) which has an input/output antenna (4), in the case of which the identification mark (1) is a surface acoustic wave component having a converter and reflector structure, characterized in that, in order to determine the relative position between two objects at a distance from one another uniquely, a plurality of identification marks (1) with different coding are applied at a predetermined point on one of the two objects, and a transmitting/receiving antenna (9) is applied at a predetermined point at the second object with respect to this, via which antenna (9) the radio pulses (11) can be transmitted and pulsed response signals can be received, and which is connected to an interrogation/evaluation appliance, and in which case the interrogation/evaluation appliance is designed such that the received pulsed response signal (10) can be used to determine an instantaneous distance (r) between the transmitting/receiving antenna (9) of the interrogation appliance and the identification marks (1), from the delay times for the path lengths between the antennas and/or from the phase, with respect to a reference phase, and, from this, the position of the first object relative to the second object.

6. Method according to Claim 5, in which the speed of movement of two objects relative to one another is determined with the aid of at least two pulsed response signals which are interrogated successively in time.

7. Method according to Claim 5 or 6, in which the profile of the Doppler frequency shift is used to determine the path velocity and/or to determine the path point at the shortest distance from the interrogated identification mark.

8. Use of a system according to one of Claims 1 to 4 or of a method according to one of Claims 5 to 7 for gripping, shunting and/or handling a container as the one object, by means of a gripping/suspension apparatus as the other object.

9. Use of a system according to one of Claims 1 to 4 and of a method according to one of Claims 5 to 7, for identifying the position and aligning a loading surface as the one object, and a loading harness as the other object.

10. Use of a system according to one of Claims 1 to 4 and of a method according to one of Claims 5 to 7, for coupling a stationary vehicle as the one object to a vehicle which can move, as the other object.

**11.** Use of a system according to one of Claims 1 to 5 and of a method according to one of Claims 6 to 10, having a fork-lift truck as the one object and having an object which can be picked up by the fork-lift truck as the other object.

**12.** Use of a system according to one of Claims 1 to 5 and of a method according to one of Claims 6 to 10, for automatically controlling the two objects as they approach one another.

**Revendications**

**1.** Système de détermination de la distance relative de deux objets l'un par rapport à l'autre au moyen d'une localisation par une technique radio en utilisant un marqueur d'identification passif (ID-Tag) (1), qui a une antenne d'émission et de réception (4), dans lequel le marqueur d'identification (1) est un composant à ondes de surface ayant une structure de convertisseur et avec une structure de réflecteur,
caractérisé par le fait que, pour la détermination univoque de la position relative entre deux objets, plusieurs marqueurs d'identification (1) ayant des codages différents sont disposés à distance les uns des autres sur l'un des deux objets à des endroits prescrits de celui-ci et qu'une antenne d'émission et de réception (9) est disposée sur le deuxième objet à un endroit prescrit de celui-ci, antenne par l'intermédiaire de laquelle des impulsions radio (11) peuvent être émises et des signaux de réponse impulsionnelle peuvent être reçus et qui est reliée à un appareil d'interrogation et d'évaluation, l'appareil d'interrogation et d'évaluation étant conçu de telle sorte que, à partir du signal de réponse impulsionnelle (10) reçu, une distance instantanée (r) entre l'antenne d'émission et de réception (9) de l'appareil d'interrogation et les marqueurs d'identification (1) peut être déterminée à partir des temps de parcours des distances entre les antennes et/ou à partir de la phase, rapportée à une phase de référence, et que, la position du premier objet par rapport au deuxième objet peut en être déterminée.

**2.** Système selon la revendication 1, dans lequel, pour la détection de position, trois marqueurs d'identification (1) sont disposés sur le premier objet à une certaine distance les uns des autres à des endroits prescrits de l'objet, lesquels marqueurs d'identification se distinguent par le codage de leurs signaux de réponse impulsionnelle.

**3.** Système selon la revendication 1 ou 2, dans lequel des marqueurs d'identification ayant des codages différents sont disposés sur l'objet selon une certaine répartition correspondant à un modèle prédéterminé.

**4.** Système selon la revendication 3, dans lequel un marqueur d'identification d'un certain codage comporte des moyens de forme/montage qui lui sont associés et par lesquels un marqueur d'identification de ce genre a un agencement mécanique différent de celui de marqueurs d'identification d'autres codages.

**5.** Procédé de détermination de la distance relative de deux objets l'un par rapport à l'autre au moyen d'une localisation par une technique radio en utilisant un marqueur d'identification passif (ID-Tag) (1), qui a une antenne d'émission et de réception (4), dans lequel le marqueur d'identification (1) est un composant à ondes de surface ayant une structure de convertisseur et une structure de réflecteur,
caractérisé par le fait que, pour la détermination univoque de la position relative entre deux objets, plusieurs marqueurs d'identification (1) ayant des codages différents sont disposés à distance les uns des autres sur l'un des deux objets à des endroits prescrits de celui-ci et qu'une antenne d'émission et de réception (9) est disposée sur le deuxième objet à un endroit prescrit de celui-ci, antenne par l'intermédiaire de laquelle des impulsions radio (11) peuvent être émises et des signaux de réponse impulsionnelle peuvent être reçus et qui est reliée à un appareil d'interrogation et d'évaluation, l'appareil d'interrogation et d'évaluation étant conçu de telle sorte que, à partir du signal de réponse impulsionnelle (10) reçu, une distance instantanée (r) entre l'antenne d'émission et de réception (9) de l'appareil d'interrogation et les marqueurs d'identification (1) peut être déterminée à partir des temps de parcours pour les distances entre les antennes et/ou à partir de la phase, rapportée à une phase de référence, et que la position du premier objet par rapport au deuxième objet peut en être déterminée.

**6.** Procédé selon la revendication 5, dans lequel on détermine à partir d'au moins deux signaux de réponse impulsionnelle interrogés successivement dans le temps la vitesse du déplacement de deux objets l'un par rapport à l'autre.

**7.** Procédé selon la revendication 5 ou 6, dans lequel on utilise l'allure du décalage de fréquence de Doppler pour la détermination de la vitesse sur la trajectoire et/ou pour la détermination du point sur la trajectoire ayant la plus petite distance au marqueur d'identification interrogé.

**8.** Utilisation d'un système selon l'une des revendications 1 à 4 ou d'un procédé selon l'une des revendications 5 à 7 pour saisir, manoeuvrer et/ou transborder un conteneur constituant le premier objet au moyen d'un dispositif de préhension et de suspension constituant l'autre objet.

9. Utilisation d'un système selon l'une des revendications 1 à 4 ou d'un procédé selon l'une des revendications 5 à 7 pour la détection de la position et de l'orientation d'une surface de chargement constituant le premier objet et d'un appareil de chargement constituant l'autre objet.

10. Utilisation d'un système selon l'une des revendications 1 à 4 ou d'un procédé selon l'une des revendications 5 à 7 pour l'attelage d'un véhicule immobile constituant le premier objet à un véhicule à déplacer constituant l'autre objet.

11. Utilisation d'un système selon l'une des revendications 1 à 5 ou d'un procédé selon l'une des revendications 6 à 10, avec un chariot élévateur à fourche constituant le premier objet et avec un objet à prendre avec le chariot élévateur à fourche et constituant l'autre objet.

12. Utilisation d'un système selon l'une des revendications 1 à 5 ou d'un procédé selon l'une des revendications 6 à 10 pour le rapprochement commandé automatiquement des deux objets l'un par rapport à l'autre.

## FIG 1

## FIG 2

10

## FIG 3

## FIG 4